# FASCICULE DE BREVET EUROPEEN

(11) **EP 3 377 716 B1**
(45) Date de publication et mention de la délivrance du brevet: **07.08.2019**
(21) Numéro de dépôt: 16812985.6
(22) Date de dépôt: 16.11.2016
(51) Int. Cl.: E04H 15/50, E04H 15/58, E04F 10/02

(54) **DISPOSITIF DE STRUCTURE DÉPLOYABLE D'ABRI**
ZUSAMMENLEGBARE UNTERSTANDSSTRUKTUR
FOLDING SHELTER STRUCTURE DEVICE

(30) Priorité: 16.11.2015 FR 1561007; 12.05.2016 FR 1654227
(43) Date de publication de la demande: 26.09.2018
(73) Titulaire: Vitabri, 25000 Besancon (FR)
(72) Inventeur: STEHLY, Alain, 25440 Charnay (FR)
(74) Mandataire: Cabinet Bleger-Rhein-Poupon
(86) Numéro de dépôt international: PCT/FR2016/052965
(87) Numéro de publication internationale: WO 2017/085398

(56) Documents cités:
- WO-A1-2007/057604
- WO-A2-2005/079414
- DE-U1- 20 320 097
- JP-U- S53 133 409

## Description

La présente invention entre dans le domaine des dispositifs de structures déployables destinées à servir d'abri ou tente.

Un tel abri est généralement constitué d'une structure métallique recouverte au moins en partie supérieure par un élément de couverture formant un toit, telle une bâche. Ladite structure est prévue déployable, autorisant l'abri à passer d'une position repliée, en vue de son stockage et de son transport, vers une position déployée formant un abri, et inversement. En position déployée, l'abri présente globalement une forme de polyèdre, préférentiellement parallélépipédique rectangle surmontée de l'élément de couverture.

Plus avant, il est connu, notamment par les documents DE-20320097-U et WO 2007/057604 une structure d'abri comprenant plusieurs montants télescopiques, chacun comportant plusieurs tronçons montés en coulissement longitudinalement, verticalement, les uns par rapport aux autres. Ces montants supportent au niveau de leur tronçon supérieur un squelette formant un maillage et composé, dans le sens longitudinal, de plusieurs longerons reliés entre eux de façon mobile, d'une part, sur leur longueur, notamment leur centre, au travers d'articulations de type ciseau et, d'autre part, à leurs extrémités au travers d'articulation en pivotement, donnant à l'ensemble une forme globale de pantographe, pouvant se replier et se déplier à la manière d'un accordéon. Les extrémités de certains longerons sont reliées aux tronçons supérieurs des montants au travers de points de pivotement. De plus, certains points de pivotement des extrémités des longerons coulissent le long des tronçons supérieurs des montants correspondants.

Transversalement, le squelette possède une ossature similaire, en croisillons, reliant des traverses, avec une géométrie déformable semblable.

Ainsi, le squelette présente une forme spécifique, avec des caissons intérieurs, conformés en polyèdres déformables, en particulier des parallélogrammes, notamment avec des faces en losanges et en triangles. Ce squelette présente au moins une symétrie selon un axe vertical orthogonal au sens longitudinal de la structure, autorisant alors le passage de la position repliée où les montants sont rapprochés les uns des autres, vers la position déployée de l'abri, et inversement, par déformation desdits caissons.

S'il est courant que d'équiper ces abris d'une toiture en forme pointue, de forme tronconique, dans certains cas, il est préféré une toiture à pente unique, notamment à pente décroissante de l'avant vers l'arrière.

Toutefois, de tels abris à simple pente restent limités en nombre, notamment en raison de leur utilisation restreinte et de leur impossibilité à être repliés de façon optimale. En effet, de tels abris présentent une structure asymétrique, surélevée vers l'avant. Cette surélévation entraîne une inclinaison du squelette et son asymétrie rendant le repliement de l'abri impossible ou bien complexe, au travers de manipulations fastidieuses, pour obtenir une structure repliée au sein d'un volume de taille supérieure par rapport à un abri classique. Les abris à simple pente sont alors souvent constitués par une structure démontable et non pliable. En outre, la pente de la toiture d'un tel abri est déterminée en fonction de la longueur des longerons, rendant impossible la modification de son degré d'inclinaison.

L'invention vise spécifiquement un abri dont l'élément de couverture présente une seule pente, s'étendant de façon décroissante, depuis l'avant vers l'arrière de l'abri ou inversement, voire d'un côté vers l'autre. Un tel abri présente un squelette conformé en pantographe.

Dans ce cadre, l'invention a pour but de proposer un abri permettant, à partir d'une structure avec un squelette conformé en pantographe autorisant le déploiement et le repliement de l'abri, d'obtenir une inclinaison de la pente de l'élément de couverture.

De plus, le degré de cette pente peut être modifié en fonction de l'implantation, voire des conditions climatiques.

Pour ce faire, il a été imaginé de prévoir au moins un longeron possédant une longueur ajustable, de préférence au moins deux, depuis une position allongée vers une position raccourcie, et inversement, au travers de positions intermédiaires. De préférence, l'aspect longitudinalement ajustable de chaque longeron est prévu de façon télescopique, par coulissement de segments constituant les longerons et les moyens adaptés dont ils sont équipés.

Dès lors, en allongeant ou raccourcissant la longueur devenue ajustable de chaque longeron, on déforme la géométrie de l'ensemble de la structure, inclinant chaque montant auquel il est relié. Du fait du caractère télescopique de chaque montant, il est alors possible d'augmenter ou diminuer sa hauteur et ainsi de rectifier son inclinaison par rapport à la verticale, afin de redresser l'ensemble de la structure et surélever un de ses côtés, conférant la pente unique souhaitée à la toiture. En opérant inversement, il est possible de revenir à une forme classique de structure, autorisant le repliement confiné au sein d'un même espace qu'une structure classique.

Ainsi, l'invention a pour objet un dispositif de structure déployable d'abri, comprenant des montants supportant en partie supérieure un squelette déformable comprenant des longerons mobiles constitués d'au moins une paire de bras articulés en ciseaux et reliés au travers de points de pivotement à des montants dont le point de pivotement, reliant à l'extrémité supérieure du montant l'extrémité d'un bras étant fixe, tandis que l'un autre point inférieur de pivotement étant situé plus bas et monté coulissant le long dudit montant en reliant de manière coulissante à ce montant l'extrémité de l'autre bras.

Un tel dispositif se caractérise par le fait qu'au moins un bras d'une paire de bras des longerons est prévu ajustable longitudinalement au travers de moyens d'allongement et de raccourcissement de sa longueur.

De préférence, au moins un bras est ajustable longitudinalement à une première extrémité d'un longeron et au moins un bras, selon le cas d'une même paire ou non, à l'extrémité opposée de ce longeron est également ajustable longitudinalement au travers de moyens d'allongement et de raccourcissement.

Selon des caractéristiques additionnelles, lesdits moyens d'allongement et de raccourcissement peuvent être télescopiques, au travers de segments coulissants constituant chaque bras ajustable.

Lesdits moyens d'allongement et de raccourcissement peuvent comprendre des moyens d'indexage de la longueur de chaque bras ajustable aux niveaux de positions extrêmes allongée et raccourcie, voire dans des positions intermédiaires.

Ainsi, en allongeant ou raccourcissant les bras ajustables entre plusieurs positions extrêmes, voire intermédiaires, il est possible de régler le degré d'inclinaison de la pente obtenue au niveau de la toiture.

Selon le mode préférentiel de réalisation, les moyens d'allongement et de raccourcissement de chaque bras ajustable peuvent comprendre un fourreau, d'une part, monté coulissant extérieurement par rapport à un segment principal dudit bras ajustable et, d'autre part, rendu solidaire d'un point de pivotement (ou d'un point d'articulation) au niveau d'un montant.

Ledit fourreau peut être rendu solidaire du point de pivotement au travers d'un segment distal fixé à une extrémité dudit fourreau et monté en rotation au travers dudit point de pivotement (ou d'un point de rotation).

Lesdits moyens d'indexage peuvent être montés fixes sur ledit fourreau et peuvent comprendre un ergot coopérant par insertion au travers d'orifices ménagés en vis-à-vis et le long dudit segment principal.

En outre, au moins deux montants peuvent être prévus télescopique, permettant d'ajuster leur longueur et de redresser la structure.

D'autres caractéristiques et avantages de l'invention ressortiront de la description détaillée qui va suivre des modes de réalisation de l'invention, en référence aux figures annexées dans lesquelles :
- la figure 1 représente schématiquement une vue en perspective d'un mode préférentiel, non limitatif, de réalisation d'un dispositif de structure selon l'invention, montrant une surélévation des montants avant, situés à gauche, conférant une pente décroissante depuis la gauche vers la droite de la figure ;
- la figure 2 représente schématiquement une vue de côté montrant un longeron du squelette de la structure, avec les bras ajustable dans une longueur intermédiaire en vue du repliement de ladite structure;
- la figure 3 représente schématiquement, partiellement et en transparence un détail d'un des bras ajustables de la figure 2, en position raccourcie ;
- la figure 4 représente schématiquement un détail similaire à la figure 3, montrant en transparence une position allongée intermédiaire d'un bras ajustable ;
- les figures 5, 6, 7 et 8 représentent schématiquement des vue de côté d'un dispositif de structure selon l'invention au cours de quatre étapes successives, réciproquement en position repliée de ladite structure pour son stockage et son transport, en position déployée dans laquelle le toit est droit, dans une première position d'allongement des bras ajustables provoquant l'inclinaison des montants et enfin dans une position redressée par ajustement de la longueur desdits montants pour conférer la pente à ladite toiture ;
- la figure 9 représente schématiquement une vue en perspective et en transparence d'un mode particulier de réalisation des moyens d'allongement et de raccourcissement d'un bras ajustable ; et
- la figure 10 représente schématiquement une vue en coupe transversale des moyens d'indexation de la figure 9.

La présente invention concerne un dispositif de structure 1 destinée à servir d'abri ou tente.

Ladite structure 1 comprend des montants 2 supportant en partie supérieure un squelette 3. La structure 1 est destinée à recevoir en recouvrement un élément de couverture 4, formant alors la toiture. Dès lors, l'abri ainsi recouvert présente une forme globalement polyédrique.

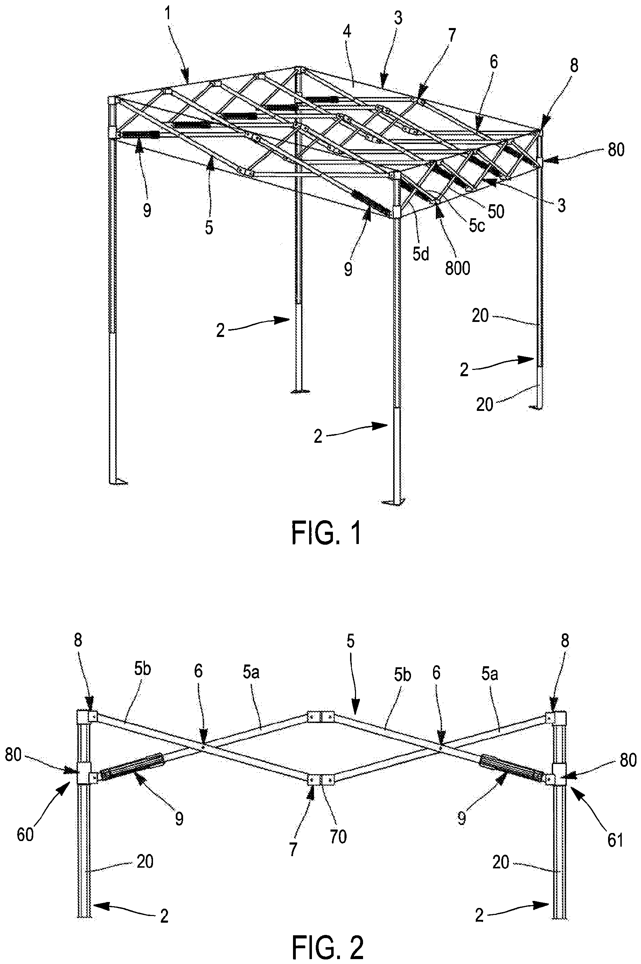

Selon le mode préférentiel de réalisation représenté sur la figure 1, l'abri est de forme rectangulaire et possède quatre montants 2.

Selon d'autres modes de réalisations, non représentés, l'abri peut avoir une autre forme, notamment à base hexagonale ou octogonale, comportant alors un plus grand nombre de montants 2.

Ledit dispositif 1 est prévu déployable, susceptible de passer d'une position repliée vers une position déployée, et inversement. A cet effet, le squelette 3 est prévu déformable. En particulier, il est constitué d'éléments articulés entre eux, autorisant une déformation de la géométrie de l'ensemble de la structure 1, en vue de passer d'une position repliée vers la position déployée, au travers de positions intermédiaires, et inversement.

Pour ce faire, longitudinalement, ledit squelette 3 comprend des longerons 5 mobiles. En outre, transversalement, le squelette 3 peut comprendre des traverses 50 prévues elles aussi mobiles, articulée de façon similaire aux longerons 5, pour former une armature transversale en croisillons.

Plus particulièrement, un longeron 5 est constitué d'au moins une paire de bras 5a, 5b, articulés en ciseaux. Ainsi, ces bras 5a, 5b sont reliés, sensiblement en leur milieu au travers d'une articulation 6 à axe de rotation horizontal ou sensiblement horizontal.

A ce titre, d'une part, la mobilité des longerons 5 est obtenue au travers d'articulations en ciseaux 6 de sa ou ses paires de bras.

Comme illustré dans les figures, un longeron 5 peut être constitué d'une succession de telles paires de bras 5a, 5b articulés en ciseau. Au moins une extrémité de chaque bras 5a ; 5b d'une première paire est reliée à l'extrémité concordante d'un bras 5b ; 5a de la paire suivante, ceci par l'intermédiaire d'articulations en pivotement 7, notamment sous forme d'une biellette 70.

D'autre part, la mobilité des longerons 5 est obtenue au moins avec les montants 2 au travers de points de pivotement 8 ; 80 avec les bras 5a, 5b. Cette jonction s'effectue au niveau des extrémités opposées des longerons 5. Selon l'invention, le point de pivotement 8, se situant à l'extrémité supérieure du montant 2 et reliant à cette dernière l'extrémité du bras, selon le cas, 5b ou 5a, est fixe. Tandis qu'un autre point inférieur de pivotement 80 est situé plus bas et est monté coulissant le long dudit montant 2. Ce point inférieur de pivotement 80 relie par conséquent de manière coulissante à ce montant 2 l'extrémité du bras, selon le cas, 5a ou 5b.

Ainsi, lors des phases de repliement et déploiement, aux extrémités 60, 61 des longerons 5, les bras 5a, selon le cas 5b, sont reliés au travers des points inférieurs de pivotement 80 sur ces montants 2 et coulissent verticalement, assurant la déformation du squelette 3 pour un bon repliement de l'ensemble.

On notera que la translation en coulissement peut s'opérer notamment par l'intermédiaire d'un chariot sur lequel est monté le point inférieur de pivotement 80, ledit chariot glissant au sein d'un rail, notamment constitué par une glissière ménagée au sein dudit montant 2. Ce chariot peut être verrouillé par rapport au montant 2 en plusieurs positions, en particulier en position haute lorsque la structure est déployée.

Les articulations 6 et 7, ainsi que les points 8 et 80 sont particulièrement visibles sur la figure 2.

En outre, transversalement et comme indiqué plus haut, le squelette 3 peut comprendre des traverses 50 prévues elles aussi mobiles et formées d'une ou plusieurs paires de bras 5c, 5d articulés en ciseau de façon similaire à ceux des longerons 5.

La mobilité des longerons 5 peut aussi être obtenue avec ces traverses 50 aux niveaux de points d'articulation 800. Plus particulièrement au niveau d'un tel point d'articulation 800, une extrémité d'un des bras 5c, 5d d'une paire correspondant à une traverse 50, vient coopérer, de manière articulée, dans une direction sensiblement perpendiculaire et au travers d'une pièce de jonction adaptée, notamment sous forme d'un croisillon, avec une extrémité d'un des bras, selon le cas 5a, 5b, d'une paire de bras d'un longeron 5, en formant un maillage croisé. Cette configuration est visible sur la figure 1.

Selon une caractéristique essentielle de la présente invention, la structure 1 permet d'obtenir une inclinaison de l'élément de couverture 4. De plus, le degré de la pente obtenu peut être réglé, notamment selon des angles prédéfinis.

Pour ce faire, au moins un des bras 5a, 5b d'une paire de bras d'un longeron 5 est prévu ajustable longitudinalement au travers de moyens 9 d'allongement et de raccourcissement de sa longueur. En d'autres termes, un bras d'un longeron 5 peut être allongé ou raccourci, induisant un changement de la forme de la structure 1, conférant une asymétrie par rapport à un plan médian verticale transversal.

De préférence, selon le mode préférentiel de réalisation, comme visible sur la figure 2, au moins un bras 5a est ajustable longitudinalement à une première extrémité 60 d'un longeron 5 et au moins un bras 5b, selon le cas d'une même paire ou non, à l'extrémité opposée 61 de ce longeron 5 est également ajustable longitudinalement. Cet ajustement en longueur des bras ajustable 5a, 5b est susceptible d'être obtenu au travers de moyens 9 d'allongement et de raccourcissement adaptés.

Dans un mode bien particulier de réalisation, au moins chaque longeron 5 situés aux extrémités latérales de la structure 1 comprennent des bras 5a, 5b pourvus de moyens 9 d'allongement et de raccourcissement.

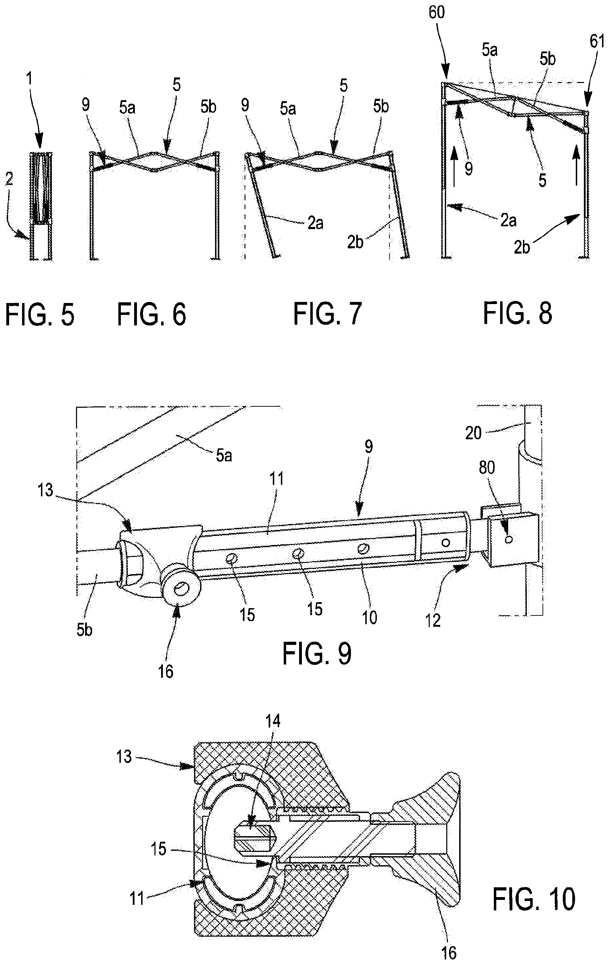

Dès lors, comme visible sur l'exemple de la figure 7, l'allongement des bras 5b à l'extrémité 61 des longerons 5 induit une inclinaison des montants 2b du côté de cette même extrémité 61. Tandis qu'un raccourcissement des bras 5a du côté de la première extrémité 60 de ces longerons 5 induit une inclinaison des montant 2a dans la même direction. Afin de redresser les montant 2a et 2b, il est nécessaire, essentiellement, d'allonger les montants 2a situés à gauche la structure 1. Il en découle la pente de l'élément de couverture 4.

On peut également souhaiter, une fois les montants 2a, 2b repositionnés verticalement, de rehausser la structure 1. Ceci peut être obtenu en augmentant la hauteur de tous les montants 2a, 2b, comme visible sur la figure 8.

Dans ce but, chaque montant 2 peut être avantageusement prévu déployable. Selon ce mode préférentiel, chaque montant 2 peut être prévu télescopique. En particulier, un montant 2 comprend au moins deux tronçons 20, intérieur et extérieur, coulissant l'un par rapport à l'autre pour passer d'une position escamotée lors du repliement de la structure 1, vers une position déployée lors du déploiement de ladite structure 1 et inversement.

Par ailleurs, chaque bras 5a, 5b d'un longeron 5 équipé des moyens 9 est préférentiellement situé de part et d'autre, aux extrémités du squelette 3, le long des bords longitudinaux de la structure 1. Dès lors, les moyens 9 relient les bras, selon le cas 5a ou 5b, aux montants 2 aux niveaux des points inférieurs de pivotement 80, ainsi qu'au niveau des points d'articulation 800 des bras 5c, 5d des traverses 50 de l'ossature en croisillons.

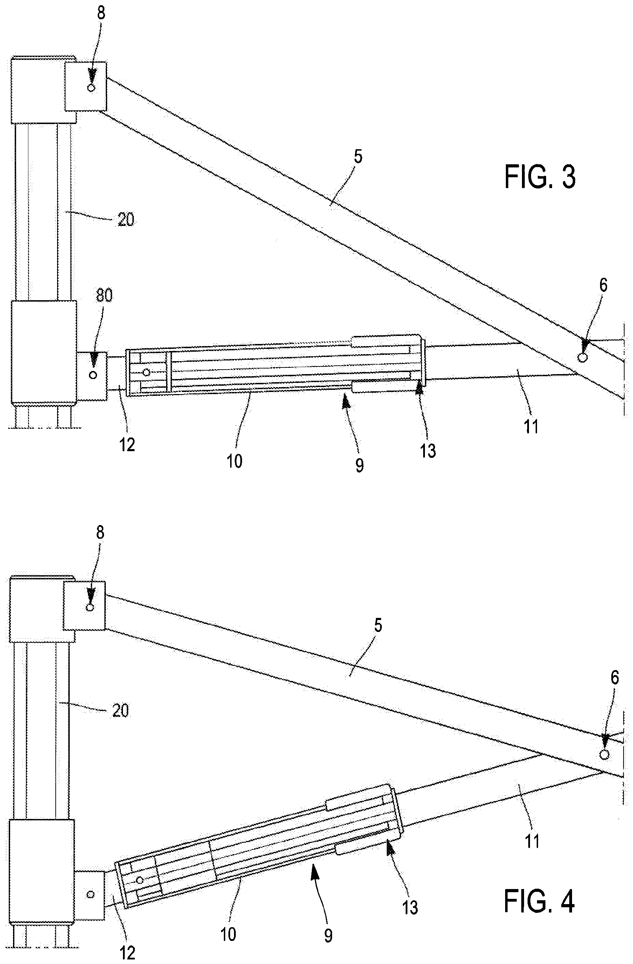

Comme visible sur les figures 3 et 4, les moyens 9 permettent d'augmenter ou de diminuer la longueur au niveau de l'extrémité équipée des bras ajustable 5a, 5b.

Plus particulièrement, selon le mode préférentiel de réalisation, lesdits moyens d'allongement et de raccourcissement 9 sont télescopiques, au travers de segments coulissants constituant chaque bras ajustable 5a, 5b.

Plus avant, de façon non limitative, les moyens d'allongement et de raccourcissement 9 de chaque bras ajustable 5a, 5b comprennent à une extrémité distale 12 un fourreau 10, d'une part, monté coulissant extérieurement par rapport à un segment principal 11 dudit bras ajustable 5a, 5b et, d'autre part, rendu solidaire d'un point de pivotement 80 ou d'un point d'articulation 800.

Plus précisément, ce fourreau 10 est rendu solidaire à l'une de ses extrémités du point de pivotement 80 (ou d'un point d'articulation 800).

Ainsi, comme visible sur la figure 4, il est possible de coulisser en translation le segment principal 11 pour l'écarter ou selon le cas le rapprocher l'extrémité distal 12, créant un espace d'une longueur donnée correspondant à l'allongement ou au raccourcissement souhaité du bras ajustable 5a, 5b.

Selon un mode de réalisation préférentiel, lesdits moyens d'allongement et de raccourcissement 9 comprennent des moyens 13 d'indexage de la longueur de chaque bras ajustable 5a, 5b au niveau de positions, préférentiellement mais non exclusivement, extrêmes allongée et raccourcie, voire avantageusement aussi dans des positions intermédiaires. Ainsi, il est possible de régler et de bloquer la longueur de chaque bras 5a, 5b, donc d'un longeron 5.

Toutefois, tous les moyens 9 peuvent ne pas être équipés d'indexation. En particulier, seuls les moyens 9 solidarisés aux montants 2 possèdent des moyens d'indexage 13, tandis que les autres, reliés à l'ossature transversale munie des traverses 50 en croisillons, n'en possèdent pas nécessairement, pouvant éventuellement coulisser librement. Dès lors, seuls les moyens 9 reliés aux montants 2 servent à l'indexage et au verrouillage.

Selon encore un mode préférentiel de réalisation, comme visible sur les figures 9 et 10, lesdits moyens d'indexage 13 sont montés fixes à l'extrémité opposée dudit fourreau 10, notamment par l'intermédiaire d'une pièce solidarisée autour du fourreau 10. Ils comprennent un ergot 14 coopérant par insertion au travers d'orifices 15 ménagés en vis-à-vis et le long dudit segment principal 11. Cet ergot 14 est monté en translation au sein d'un logement conformé complémentairement.

L'ergot 14 peut aussi être équipé de moyens de rappel élastique, le repoussant dans un mouvement de translation vers une position d'insertion et de verrouillage. Ainsi, il suffit de tirer l'ergot 14, par l'intermédiaire de moyens de préhension 16 adaptés, puis de coulisser le segment principal du bras ajustable 5a, 5b par rapport au fourreau 10 jusqu'à ce qu'un orifice 15 se retrouve en face dudit ergot 14 et que ce dernier vienne être repoussé automatiquement pour s'y enclencher. Chaque orifice 15 permet alors de régler une position et une inclinaison particulière de la pente du dispositif 1.

Les orifices 15 peuvent être espacés à intervalles réguliers ou non.

On comprendra que ces moyens d'indexage 13 peuvent prendre diverses formes de réalisation ayant pour but d'immobiliser dans un positon donnée la longueur d'un bras ajustable 5a, 5b, telles que goupille, lame ressort avec bille, système vis écrou, etc...

En outre, le déplacement des tronçons 20 de chaque montant 2 peut être lui aussi indexé permettant de les bloquer verticalement selon plusieurs positions, de préférence une position basse où les tronçons 20 sont entièrement escamotés, une position extrême de déploiement maximal dans laquelle l'ossature est surélevée, mais aussi au moins une position intermédiaire dans laquelle l'ossature est horizontale. L'indexage des positions le long des montants 2 peut avantageusement correspondre à l'indexage des moyens 9 au niveau des orifices 15.

Préférentiellement, l'angle de la pente peut être indexée selon des valeurs angulaires déterminée, allant de 1 à 45 degrés, préférentiellement au moins 5 degrés, par intervalle de 1 à 5 degrés.

Ainsi, le dispositif de structure 1 selon l'invention permet de rapidement et simplement conférer une pente à un abri, à partir d'un squelette 3 conformé en pantographes, ainsi que des croisillons, au moyen de l'allongement et du raccourcissement de certains des bras ajustables 5a, 5b de ses longerons 5, tout en conservant la géométrie nécessaire au repliement optimal d'une telle structure 1.

En d'autres termes, la longueur variable d'au moins un longeron 5, de préférence plusieurs, permet la déformation des parallélogrammes du squelette 3, conférant à ce dernier, selon le cas, une régularité nécessaire au repliement de ladite structure 1 ou, contrairement, après déploiement, une irrégularité permettant d'imprimer à la toiture l'inclinaison souhaitée. De cette inclinaison et du caractère télescopique du ou des montants 2, en découle l'inclinaison, par rapport à l'horizontal, de la toiture, selon un sens de ladite structure 1, de préférence le sens longitudinal.

De la même façon, l'invention peut être adaptée aux niveaux des traverses et du maillage transversal en croisillons, afin de conférer une inclinaison dans le sens transversal de la structure 1.

## Revendications

1. Dispositif de structure (1) déployable d'abri, comprenant des montants (2) supportant en partie supérieure un squelette (3) déformable comprenant des longerons (5) mobiles constitués d'au moins une paire de bras (5a, 5b) articulés en ciseaux et reliés au travers de points de pivotement (8 ; 80) à des montants (2), dont le point de pivotement (8), reliant à l'extrémité supérieure du montant (2) l'extrémité du bras, selon le cas, (5b ou 5a), étant fixe, tandis que l'un autre point inférieur de pivotement (80) étant situé plus bas et monté coulissant le long dudit montant (2) en reliant de manière coulissante à ce montant (2) l'extrémité du bras, selon le cas, (5a ou 5b) ; **caractérisé par le fait qu'**au moins un bras (5a, 5b) d'une paire de bras d'un longeron (5) est prévu ajustable longitudinalement au travers de moyens (9) d'allongement et de raccourcissement de sa longueur.

2. Dispositif de structure (1) selon la revendication 1, **caractérisé par le fait qu'**au moins un bras (5a) est ajustable longitudinalement à une première extrémité (60) d'un longeron (5) et au moins un bras (5b), selon le cas d'une même paire ou non, à l'extrémité opposée (61) de ce longeron (5) est également ajustable longitudinalement, au travers de moyens (9) d'allongement et de raccourcissement.

3. Dispositif de structure (1) selon l'une quelconque des revendications précédentes, **caractérisé par le fait que** lesdits moyens (9) d'allongement et de raccourcissement sont télescopiques, au travers de segments coulissants (10, 11) constituant chaque bras ajustable (5a, 5b).

4. Dispositif de structure (1) selon la revendication 2 ou 3, **caractérisé par le fait que** lesdits moyens (9) d'allongement et de raccourcissement comprennent des moyens d'indexage (13) de la longueur de chaque bras ajustable (5a, 5b), notamment aux niveaux de positions extrêmes allongée et raccourcie.

5. Dispositif de structure selon la revendication 3, **caractérisé par le fait que** les moyens (9) d'allongement et de raccourcissement de chaque bras ajustable (5a, 5b) comprennent un fourreau (10), d'une part, monté coulissant extérieurement par rapport à un segment principal (11) dudit bras ajustable (5a, 5b) et, d'autre part, rendu solidaire d'un point de pivotement (80) au niveau d'au moins un montant (2) .

6. Dispositif de structure (1) selon la revendication 5, **caractérisé par le fait que** ledit fourreau (10) est rendu solidaire du point de pivotement (80).

7. Dispositif de structure (1) selon la revendication 6, **caractérisé par le fait que** lesdits moyens d'indexage (13) sont montés fixes sur ledit fourreau (10) et comprennent un ergot (14) coopérant par insertion au travers d'orifices (15) ménagés en vis-à-vis et le long dudit segment principal (11).

8. Dispositif de structure (1) selon l'une quelconque des revendications précédentes, **caractérisé par le fait qu'**au moins deux montants (2) disposés d'un même côté de la structure (1) et auxquels sont fixé par les points de pivotement (8 ; 80) de l'extrémité (60) d'un longeron (5) sont prévus télescopique.

9. Dispositif de structure (1) selon l'une quelconque des revendications précédentes, **caractérisé par le fait que** tous les montants (2) sont prévus télescopique.

10. Dispositif de structure (1) selon l'une quelconque des revendications précédentes, **caractérisé par le fait que** le squelette (3) comprend des traverses (50) prévues mobiles et formées d'une ou plusieurs paires de bras (5c, 5d) articulés en ciseau de façon similaire à ceux des longerons (5) coopérant avec les traverses (50) aux niveaux de points d'articulation (800).

## Patentansprüche

1. Ausklappbare Unterstandsstrukturvorrichtung (1), umfassend Pfosten (2), die im oberen Teil ein verformbares Skelett (3) stützen, umfassend bewegliche Längsträger (5), die aus mindestens einem Paar Armen (5a, 5b) bestehen, die scherenartig gelenkig sind und mittels Schwenkpunkten (8; 80) mit Pfosten (2) verbunden sind, deren Schwenkpunkt (8), welcher mit dem oberen Ende des Pfostens (2) das Ende des Arms je nach Fall (5b oder 5a) verbindet, fest ist, wogegen sich ein anderer unterer Schwenkpunkt (80) niedriger befindet und gleitend entlang auf dem Pfosten (2) angebracht ist, indem er gleitend mit diesem Pfosten (2) das Ende des Arms je nach Fall (5a, 5b) verbindet, **dadurch gekennzeichnet, dass** mindestens ein Arm (5a, 5b) eines Paares von Armen eines Längsträgers (5) mittels Verlängerungs- und Verkürzungsmitteln (9) seiner Länge längs einstellbar vorgesehen ist.

2. Strukturvorrichtung (1) nach Anspruch 1, **dadurch gekennzeichnet, dass** mindestens ein Arm (5a) längs an einem ersten Ende (60) eines Längsträgers (5) einstellbar ist und mindestens ein Arm (5b), je nach Fall eines selben Paares oder nicht, am gegenüberliegenden Ende (61) dieses Längsträgers (5) mittels Verlängerungs- und Verkürzungsmittel (9) ebenfalls längs einstellbar ist.

3. Strukturvorrichtung (1) nach einem der vorangehenden Ansprüche, **dadurch gekennzeichnet, dass** die Verlängerungs- und Verkürzungsmittel (9) anhand gleitender Segmente (10, 11), die jeden einstellbaren Arm (5a, 5b) bilden, teleskopisch sind.

4. Strukturvorrichtung (1) nach Anspruch 2 oder 3, **dadurch gekennzeichnet, dass** die Verlängerungs- und Verkürzungsmittel (9) Indexiermittel (13) der Länge jedes einstellbaren Arms (5a, 5b) umfassen, insbesondere im Bereich einer verlängerten und verkürzten extremen Position.

5. Strukturvorrichtung nach Anspruch 3, **dadurch gekennzeichnet, dass** die Verlängerungs- und Verkürzungsmittel (9) jedes einstellbaren Arms (5a, 5b) eine Hülle (10) umfassen, die zum einen gleitend außerhalb in Bezug auf ein Hauptsegment (11) des einstellbaren Arms (5a, 5b) angebracht ist und zum anderen mit einem Schwenkpunkt (80) im Bereich von mindestens einem Pfosten (2) fest verbunden ist.

6. Strukturvorrichtung (1) nach Anspruch 5, **dadurch gekennzeichnet, dass** die Hülle (10) mit dem Schwenkpunkt (80) fest verbunden ist.

7. Strukturvorrichtung (1) nach Anspruch 6, **dadurch gekennzeichnet, dass** die Indexiermittel (13) fest auf der Hülle (10) angebracht sind und einen Sporn (14) umfassen, der durch Einsetzen durch Öffnungen (15), die gegenüber dem und entlang des Hauptsegments (11) ausgebildet sind, zusammenwirkt.

8. Strukturvorrichtung (1) nach einem der vorangehenden Ansprüche, **dadurch gekennzeichnet, dass** mindestens zwei Pfosten (2), die auf einer selben Seite der Struktur (1) angeordnet sind und an denen anhand von Schwenkpunkten (8; 80) des Endes (60) eines Längsträgers (5) befestigt sind, teleskopisch vorgesehen sind.

9. Strukturvorrichtung (1) nach einem der vorangehenden Ansprüche, **dadurch gekennzeichnet, dass** alle Pfosten (2) teleskopisch vorgesehen sind.

10. Strukturvorrichtung (1) nach einem der vorangehenden Ansprüche, **dadurch gekennzeichnet, dass** das Skelett (3) Querträger (50) umfasst, die beweglich vorgesehen sind und von einem oder mehreren Paaren von Armen (5c, 5d) gebildet sind, die ähnlich wie die der Längsträger (5) scherenartig gelenkig sind, die mit den Querträgern (50) im Bereich von Gelenkpunkten (800) zusammenwirken.

## Claims

1. A deployable shelter structure device (1), comprising uprights (2) supporting, in the upper part, a deformable skeleton (3) comprising movable stringers (5) made up of at least one pair of arms (5a, 5b) articulated in scissors and connected through pivot points (8; 80) to uprights (2), whereof the pivot point (8), connecting, to the upper end of the upright (2), the end of the arm, depending on the case, (5b or 5a), being fixed, while the other lower pivot point (80) being located lower and mounted sliding along said upright (2) while slidingly connecting this upright (2) to the end of the arm, depending on the case, (5a or 5b); **characterized in that** at least one arm (5a, 5b) of a pair of arms of a stringer (5) is provided to be longitudinally adjustable through means (9) for elongating or shortening its length.

2. The structure device (1) according to claim 1, **characterized in that** at least one arm (5a) is longitudinally adjustable at a first end (60) of a stringer (5) and at least one arm (5b), depending on the case of a same pair or not, at the opposite end (61) of this stringer (5), is also longitudinally adjustable, through elongating and shortening means (9).

3. The structure device (1) according to any one of the preceding claims, **characterized in that** said elongating and shortening means (9) are telescoping, through sliding segments (10, 11) each making up adjustable arms (5a, 5b).

4. The structure device (1) according to claim 2 or 3, **characterized in that** said elongating and shortening means (9) comprise indexing means (13) for indexing the length of each adjustable arm (5a, 5b), in particular at the extreme elongated and shortened positions.

5. The structure device according to claim 3, **characterized in that** the elongating and shortening means (9) of each adjustable arm (5a, 5b) comprise a sheath (10), on the one hand, mounted sliding outwardly relative to a main segment (11) of said adjustable arm (5a, 5b) and, on the other hand, secured to a pivot point (80) at least at one upright (2).

6. The structure device (1) according to claim 5, **characterized in that** said sheath (10) is secured to the pivot point (80).

7. The structure device (1) according to claim 6, **characterized in that** said indexing means (13) are mounted fixed on said sheath (10) and comprise a lug (14) cooperating by insertion through orifices (15) arranged opposite and along said main segment (11).

8. The structure device (1) according to any one of the preceding claims, **characterized in that** at least two uprights (2) arranged on a same side of the structure (1) and to which are fastened [sic] by the pivot points (8; 80) of the end (60) of the stringer (5) are provided to be telescoping.

9. The structure device (1) according to any one of the preceding claims, **characterized in that** all of the uprights (2) are provided to be telescoping.

10. The structure device (1) according to any one of the preceding claims, **characterized in that** the skeleton (3) comprises crosspieces (50) provided to be movable and formed by one or several pairs of arms (5c, 5d) articulated in scissors similar to those of the stringers (5) cooperating with the crosspieces (50) at articulation points (800).
